# FASCICULE DE BREVET EUROPEEN

(11) **EP 0 862 732 B1**
(45) Date de publication et mention de la délivrance du brevet: **28.08.2002**
(21) Numéro de dépôt: 96939125.9
(22) Date de dépôt: 15.11.1996
(51) Int. Cl.: G01L 7/04

(54) **MANOMETRE A TUBE DE BOURDON**
DRUCKMESSER MIT BOURDON-ROHR
BOURDON TUBE PRESSURE GAUGE

(30) Priorité: 23.11.1995 FR 9513941
(43) Date de publication de la demande: 09.09.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: CANNET, Gilles, F-95620 Parmain (FR); THOUVIER, Stéphane, F-95110 Sannois (FR); CHARBONNEL, Jean-Christophe, F-95000 Cergy (FR)
(74) Mandataire: Pittis, Olivier
(86) Numéro de dépôt international: FR9601805
(87) Numéro de publication internationale: WO97019333

(56) Documents cités:
- FR-A- 1 023 600
- GB-A- 562 097
- US-A- 3 147 623

## Description

La présente invention se rapporte à un manomètre du type à tube de Bourdon.

Les manomètres de ce type comportent généralement un corps, un organe capteur de pression constitué par un tube cintré élastiquement déformable fixé audit corps et comportant une extrémité fixe de mise en communication avec un fluide en vue d'en mesurer la pression et une extrémité opposée fermée libre de se déplacer par rapport audit corps sous l'action de la pression du fluide et pilotant un indicateur de pression.

Ces manomètres sont d'une très grande précision mais comportent des pièces particulièrement fragiles, telles que le mécanisme reliant le tube de Bourdon à l'aiguille, l'aiguille et le tube de Bourdon.

Pour éviter la destruction des manomètres lorsqu'ils sont soumis à des chocs directs, c'est-à-dire des chocs qui leur sont directement appliqués, il est connu d'équiper leur boîtier d'une enveloppe en élastomère pour absorber les chocs. D'autres manomètres sont équipés d'une grille métallique formant une cage autour du boîtier.

Les protections de ce type présentent une protection efficace contre des chocs directs.

De telles protections ne sont cependant pas efficaces contre des accélérations supérieures à 400 g engendrées par exemple lors de la chute d'une bouteille sur laquelle les manomètres sont montés.

En effet, dans ce cas, le tube de Bourdon sous l'effet de son propre poids et du poids des pièces qui y sont fixées, tend à se déformer au-delà de sa limite élastique, ce qui provoque une détérioration du manomètre.

Par ailleurs, au cours de sa déformation, le tube est susceptible d'écraser le mécanisme de pilotage de l'aiguille, ce qui rend le manomètre inutilisable.

D'autres manomètres sont proposés par les documents US-A-3,147,623 et GB-A-562, 097.

US-A-3,147,623 décrit un manomètre comportant un corps, un organe capteur de pression à tube de Bourdon fixé au corps et une butée de limitation de la déformation du tube interposée entre le corps et le tube.

Le manomètre enseigné par GB-A-562,097 est très proche de celui décrit par US-A-3,147,623.

L'invention vise à pallier ces inconvénients et à fournir un manomètre capable de résister à des chocs indirects, c'est-à-dire dont le point d'impact ne se situe pas sur le manomètre lui-même.

Elle a donc pour objet un manomètre du type précité, comportant au moins une butée de limitation de la déformation du tube, interposée entre le corps et le tube, caractérisé en ce que la butée comporte une partie de fixation sur le corps prolongée en direction du tube par une partie active en arc de cercle disposée en regard d'une zone du tube intermédiaire entre lesdites extrémités fixe et libre.

L'invention peut en outre comporter une ou plusieurs caractéristiques suivantes :
- la partie active en arc de cercle comporte une surface active convexe, à convexité tournée vers le tube et de rayon de courbure sensiblement égal à celui du tube, et sur laquelle vient buter la surface radialement interne du tube ;
- la partie active en arc de cerclé se prolonge extérieurement par au moins un rebord partiellement annulaire de limitation du déplacement du tube selon une direction perpendiculaire au plan défini par ledit tube cintré ;
- la partie active en arc de cercle comporte en outre une surface active concave, coaxiale à la surface active convexe, à convexité tournée vers le tube et de rayon de courbure sensiblement égal à celui du tube, ladite surface active concave s'étendant de façon radialement externe par rapport à ladite surface active convexe pour limiter le déplacement du tube selon une direction radialement externe ;
- la partie de fixation comporte une découpe délimitant un logement muni de moyens de fixation sur ledit corps ;
- la butée comporte un doigt fixe par rapport au corps et s'étendant en direction de l'extrémité libre fermée du tube et sur lequel vient buter cette extrémité;
- la butée s'étend sensiblement dans le prolongement de l'extrémité libre fermée du tube ;
- ledit indicateur de pression comportant une aiguille montée angulairement déplaçable par rapport à un cadran gradué, ledit doigt comporte un filetage coopérant avec un taraudage complémentaire ménagé dans le corps ou dans le reste de la butée et constitue un organe de réglage de la position au repos de l'aiguille en regard de l'origine de la graduation ;
- ledit tube cintré ayant une forme spiralée, la butée comporte une partie de fixation sur le corps prolongée en direction du tube par une partie active cylindrique coaxiale au tube cintré;
- la butée est réalisée en un matériau rigide ;
- au moins la partie active de la butée est réalisée en un matériau élastiquement déformable.

D'autres caractéristiques et avantages ressortiront de la description suivante, donnée uniquement à titre d'exemple et sans caractère limitatif, en regard des dessins annexés sur lesquels :
- la figure 1 représente une vue schématique de dessous d'un premier mode de réalisation d'un manomètre selon l'invention ;
- la figure 2 est une vue schématique en coupe illustrant un autre mode de réalisation de la zone active de la butée du manomètre de la figure 1 ;
- la figure 3 illustre un troisième mode de réalisation de la zone active de la butée ;
- la figure 4 représente un autre mode de réalisation du manomètre selon l'invention ;
- la figure 5 représente un autre mode de réalisation du manomètre selon l'invention ; et
- la figure 6 représente un autre mode de réalisation d'une butée pour manomètre à tube de Bourdon spiralé.

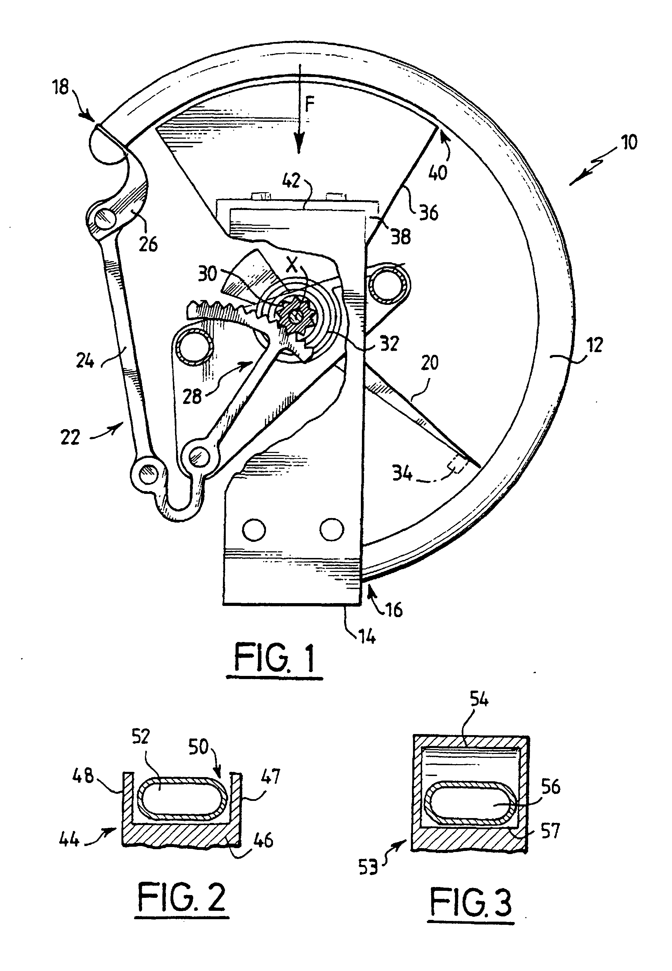

Sur la figure 1, on a représenté en position verticale et de repos un manomètre du type à tube de Bourdon, désigné par la référence numérique 10.

Ce manomètre 10 comporte un tube 12 métallique élastiquement déformable fixé sur un corps 14, fictivement tronqué, venant se fixer sur une bouteille de fluide sous pression (non représentée) ou tout autre appareil ou canalisation contenant un fluide sous pression.

Le tube 12, appelé également tube de Bourdon, comporte une première extrémité 16 fixée sur le corps 14 et destinée à être mise en communication avec un fluide en vue d'en mesurer sa pression et une extrémité opposée 18 fermée libre de se déplacer par rapport au corps 14 sous l'effet de la pression exercée par le fluide.

L'extrémité libre 18 est reliée à un mécanisme d'entraînement d'un indicateur de pression constitué par une aiguille 20 angulairement déplaçable autour d'un axe de rotation X perpendiculaire au plan de la figure 1.

Le mécanisme d'entraînement, désigné par la référence numérique 22, comporte une biellette 24 articulée d'une part sur une attache 26 reliée à l'extrémité libre 18 du tube 12, et d'autre part sur une crémaillère 28 pilotant la rotation d'un pignon 30 définissant l'axe de rotation X et solidaire de l'aiguille 20.

Le manomètre 10 comporte en outre un organe élastique de rappel constitué par un ressort spiralé 32 reliant l'aiguille 20 au corps 14 et sollicitant l'aiguille en position de repos (figure 1) dans laquelle elle est en appui sur une butée d'aiguille 34, représentée en traits mixtes.

On voit sur cette figure 1 que le manomètre comporte en outre une butée 36 interposée entre le corps 14 et le tube de Bourdon 12.

La butée 36 comporte une partie 38 de fixation sur le corps 14 se prolongeant extérieurement en direction du tube 12 par une partie active 40 en arc de cercle disposée en regard d'une zone du tube 12 intermédiaire entre les extrémités fixes 16 et libres 18.

La partie en arc de cercle 40 délimite une surface active convexe, à convexité tournée vers le tube 12 et dont le rayon de courbure est sensiblement égal à celui du tube 12.

La partie de fixation 38 de la butée 36 comporte une découpe 42 délimitant un logement de réception du corps 14 sur lequel la butée 36 est fixée.

Avantageusement, la butée 36 est fixée sur le corps 14 par vissage.

Comme mentionné précédemment, le manomètre qui vient d'être décrit est destiné à équiper une bouteille de fluide en vue d'en mesurer sa pression.

Lorsqu'il est soumis à une choc indirect, c'est-à-dire un choc appliqué sur la bouteille, par exemple lors la chute de cette bouteille, une accélération est transmise au manomètre, ce qui provoque, par inertie, une déformation du tube de Bourdon 12, selon une direction opposée à celle de la force appliquée sur la bouteille.

Afin de limiter le déplacement du tube 12 on place la butée 36 sur le trajet du tube, de manière à limiter la déformation à une déformation élastique.

On conçoit que les chocs les plus fréquents sont appliqués sur le fond de la bouteille. De tels chocs provoquent un déplacement du tube de Bourdon 12 selon une direction radialement interne, en considérant le cintrage du tube, et dirigé verticalement et vers le bas, c'est-à-dire selon le sens désigné par la flèche F de la figure 1. Ce déplacement s'effectue donc selon le sens inverse au sens normal de travail du tube, considéré à partir de la position de repos.

Dans l'exemple représenté, la butée 36 est située sur le trajet du tube 12 soumis à une force exercée sur le fond de la bouteille, mais bien entendu la butée 36 peut être disposée en regard de toute autre zone du tube 12 intermédiaire entre les extrémités fixe 16 et libre 18.

Ainsi, selon un mode de réalisation non représenté, on peut envisager de doter le manomètre d'une butée munie d'une partie active délimitant une surface convexe sensiblement égale à la surface radialement interne du tube. Ce mode de réalisation permet de protéger le manomètre contre tous les types de chocs engendrant un déplacement du tube selon une direction opposée à son sens normal de travail.

On conçoit que la butée 36 permet de limiter le déplacement du tube de Bourdon 12 engendré par des chocs appliqués à la bouteille équipée du manomètre. Cette butée permet d'une part de limiter les déplacements du tube 12 à des déformations élastiques et, d'autre part de limiter les efforts appliqués par la butée d'aiguille 34 à l'aiguille 20 et donc de limiter les déformations de cette aiguille.

Avantageusement, la butée 36 est réalisée en un matériau rigide, par exemple du laiton. On peut cependant envisager d'utiliser une butée réalisée en matériau élastiquement déformable tel que du nylon. Dans ce cas le corps 14 et la butée 36 peuvent être munis de moyens de fixation par encliquetage.

D'autres modes de réalisation de la butée vont maintenant être décrits en référence aux figures 2 à 6.

On voit sur la figure 2, sur laquelle la zone radialement externe d'une butée 44 a été schématiquement représentée en coupe, que selon un deuxième mode de réalisation la partie active en arc de cercle 46 se prolonge extérieurement par deux rebords partiellement annulaires 47 et 48 délimitant une gorge 50 de réception du tube de Bourdon 52.

Ce mode de réalisation permet de limiter les déplacements du tube 52 d'une part selon une direction opposée au sens normal de travail du tube, comme dans l'exemple de réalisation de la figure 1, et, d'autre part, selon une direction perpendiculaire au plan défini par le tube de Bourdon 52, c'est-à-dire perpendiculaire au sens normal de travail du tube.

Selon un troisième mode de réalisation représenté sur la figure 3, la partie active en arc de cercle de la butée 53 comporte en outre une surface active concave 54, à concavité tournée vers le tube 56 et de rayon de courbure sensiblement égal à celui du tube. Cette surface concave 54 s'étend de façon radialement externe par rapport à la surface active convexe 57 et est concentrique à celle-ci. Elle constitue une surface de butée pour la surface radialement externe du tube de Bourdon 56 et limite ainsi le déplacement du tube selon une direction radialement externe c'est-à-dire dans le sens normal de travail du tube.

Dans ce cas, on conçoit que la surface active concave 54 est espacée du tube de Bourdon 56 d'une distance suffisante pour lui permettre d'assurer sa fonction et pour intervenir au-delà de la plage de travail normal du tube en limitant les déformations, subies en cas de chocs non directs, à des déformations élastiques.

Il est à noter que dans les modes de réalisation décrits précédemment, la butée n'est pas en contact avec le tube tant que le manomètre n'est pas heurté. Elle ne pertube donc pas le fonctionnement du manomètre en l'absence de choc. Le jeu entre le tube et la butée autorise des tolérances de fabrication plus larges et donc un coût diminué. Il permet en outre d'utiliser la butée pour des manomètres du type à dépression et dont la déformation du tube, par rapport à des pressions positives, se fait dans le sens inverse, vers la butée.

Bien entendu, il est également possible de doter le manomètre d'une butée en contact avec le tube.

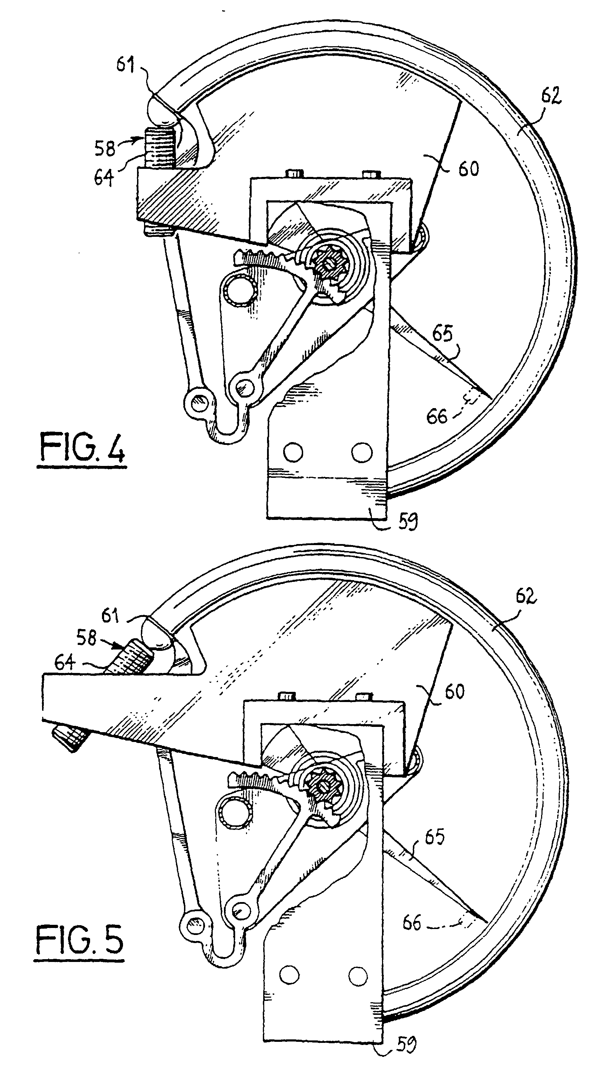

En se référant aux figures 4 et 5, sur lesquelles un manomètre similaire à celui de la figure 1 a été représenté, le manomètre comporte un doigt 58 fixe par rapport au corps 59 sur lequel est fixée une butée 60, comme définie précédemment, et s'étendant en direction de l'extrémité 61 libre fermée du tube 62 et sur lequel vient buter cette extrémité 61.

L'axe longitudinal du doigt 58 est de préférence orienté de façon parallèle à la direction des efforts plus fréquents, comme mentionné précédemment en référence à la figure 1 mais peut, en variante se situer dans le prolongement de l'extrémité libre fermée du tube (figure 5).

Le doigt 58 est muni d'un filetage 64 s'engageant dans un taraudage complémentaire (non visible sur les figures 4 et 5) ménagé dans la butée 60.

Ce doigt 58 constitue une butée complémentaire permettant de limiter le déplacement de la zone d'extrémité 61 correspondante du tube 62. Il peut également être utilisé en l'absence de la butée 60. Dans ce cas, il est directement fixé sur le corps 59.

On conçoit que ce doigt 58 permet également, par réglage de sa position axiale par vissage ou dévissage, de limiter la pression exercée par l'aiguille 65 sur sa butée d'aiguille 66.

Il permet, en variante, en l'absence de la butée d'aiguille, de régler la position au repos de l'aiguille en regard de l'origine de la graduation du cadran du manomètre (non représenté).

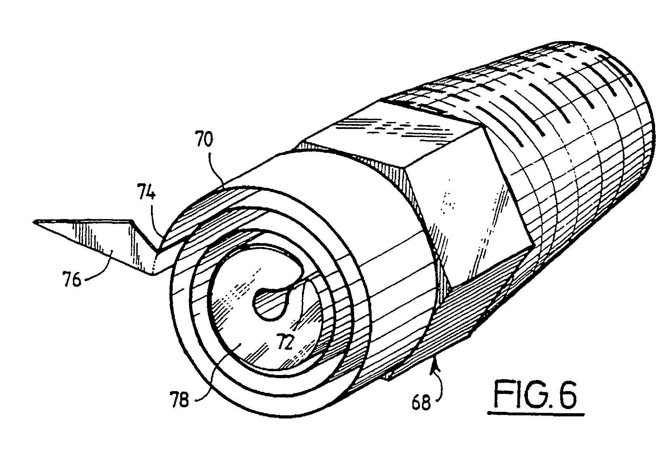

Un cinquième mode de réalisation de la butée selon l'invention va maintenant être décrit en référence à la figure 6.

Le manomètre représenté sur cette figure comporte un corps 68 destiné à être fixé sur une bouteille de fluide sous pression (non représentée) et auquel est fixé un tube de Bourdon 70 spiralé.

Le tube 70 comporte, comme dans les exemples de réalisations précédents, une extrémité fixe 72 solidaire du corps 68 et une extrémité opposée 74 fermée, libre de se déplacer par rapport au corps 68, à laquelle est fixée une aiguille 76.

Ce manomètre comporte une butée 78 de forme généralement cylindrique, coaxiale au tube spiralé 70 et munie d'une première extrémité fixée au corps 68, l'autre extrémité délimitant une surface active sur laquelle vient buter la surface radialement interne du tube de Bourdon 70 en cas de choc.

Ce type de manomètre permet donc de résister aux chocs dirigés selon une direction opposée ou confondue au sens normal de travail du tube 70.

On conçoit que dans les différents modes de réalisation qui ont été décrits les manomètres présentent une résistance aux chocs particulièrement élevée, et ce pour des chocs engendrant des accélérations supérieures à 400 g.

L'invention n'est pas limitée aux modes de réalisation qui ont été décrits.

C'est ainsi que le corps et la butée du manomètre peuvent être réalisés en une seule pièce constituée d'un matériau rigide comportant, le cas échéant, une partie souple élastiquement déformable garnissant les surfaces actives de la butée.

## Revendications

1. Manomètre comportant un corps (14;59;68), un organe capteur de pression (12;52;56;62;70) constitué par un tube cintré élastiquement déformable fixé audit corps (14;59;68) et comportant une extrémité fixe (16;72) de mise en communication avec un fluide en vue d'en mesurer la pression et une extrémité opposée fermée (18;61;74) libre de se déplacer par rapport audit corps (14;59;68) sous l'action de la pression du fluide et pilotant un indicateur de pression (20;65;76), au moins une butée (36;44;53;58;60) de limitation de la déformation du tube reliée au corps (14;59;68), **caractérisé en ce que** la butée (36;44;53;60) comporte une partie (38) de fixation sur le corps (14;59) prolongée en direction du tube (12;52;56;62) par une partie active (40;46;57) en arc de cercle disposée en regard d'une zone intermédiaire du tube entre lesdites extrémités fixe et libre.

2. Manomètre selon la revendication 1, **caractérisé en ce que** la partie active en arc de cercle comporte une surface active convexe (40;46;57), à convexité tournée ver le tube (12;52;56) et de rayon de courbure sensiblement égal à celui du tube, et sur laquelle vient buter la surface radialement interne du tube (12;52;56).

3. Manomètre selon l'une des revendications 1 ou 2, **caractérisé en ce que** la partie active (46) en arc de cercle se prolonge extérieurement par au moins un rebord (47;48) partiellement annulaire de limitation du déplacement du tube (52) selon une direction perpendiculaire au plan défini par ledit tube cintré (52).

4. Manomètre selon l'une des revendications 2 ou 3, **caractérisé en ce que** la partie active en arc de cercle comporte en outre une surface active concave (54), coaxiale à la surface active convexe (57), à concavité tournée vers le tube (56) et de rayon de courbure sensiblement égal à celui du tube (56), ladite surface active concave (54) s'étendant de façon radialement externe par rapport à ladite surface active convexe (57) pour limiter le déplacement du tube (56) selon une direction radialement externe.

5. Manomètre selon l'une des revendications 1 à 4, **caractérisé en ce que** la partie de fixation comporte une découpe (42) délimitant un logement muni de moyens de fixation sur ledit corps.

6. Manomètre selon l'une des revendications 1 à 5, **caractérisé en ce que** la butée comporte un doigt (58) fixe par rapport au corps et s'étendant en direction de l'extrémité libre (61) fermée du tube (62) et sur lequel vient buter cette extrémité (61).

7. Manomètre selon la revendication 6, **caractérisé en ce que** le doigt (58) s'étend sensiblement dans le prolongement de l'extrémité libre (61) fermée du tube (62).

8. Manomètre selon l'une des revendications 6 ou 7, **caractérisé en ce que** ledit indicateur de pression comportant une aiguille montée angulairement déplaçable par rapport à un cadran gradué, ledit doigt (58) comporte un filetage coopérant avec un taraudage complémentaire ménagé dans le corps ou dans le reste de la butée et constitue un organe de réglage de la position au repos de l'aiguille en regard de l'origine de la graduation.

9. Manomètre comportant un corps (14;59;68), un organe capteur de pression (12;52;56;62;70) constitué par un tube cintré élastiquement déformable fixé audit corps (14;59;68) et comportant une extrémité fixe (16;72) de mise en communication avec un fluide en vue d'en mesurer la pression et une extrémité opposée fermée (18;61;74) libre de se déplacer par rapport audit corps (14;59;68) sous l'action de la pression du fluide et pilotant un indicateur de pression (20;65;76), au moins une butée (36;44;53;58;60) de limitation de la déformation du tube reliée au corps (14;59;68), **caractérisé en ce que** ledit tube cintré (70) ayant une forme spiralée, la butée (78) comporte une partie de fixation sur le corps (68) prolongée en direction du tube (70) par une partie active cylindrique coaxiale au tube cintré (70).

10. Manomètre selon l'une quelconque des revendications 1 à 9, **caractérisé en ce que** la butée est constituée de laiton.

11. Manomètre selon l'une quelconque des revendications 2 à 9, **caractérisé en ce qu'**au moins la partie active de la butée est réalisée en un matériau élastiquement déformable.

## Patentansprüche

1. Druckmesser mit einem Körper (14; 59; 68), einem Drucksensorglied (12; 52; 56; 62; 70), das aus einem an dem Körper (14; 59; 68) befestigten, elastisch verformbaren, gebogenen Rohr besteht, das ein festes Ende (16; 72) zur Herstellung einer Verbindung mit einem Fluid zur Messung des Drucks und ein gegenüberliegendes, geschlossenes Ende (18; 61; 74), das sich unter der Wirkung des Fluiddrucks bezüglich des Körpers (14; 59; 68) bewegen kann und eine Druckanzeige (20; 65; 76) steuert, aufweist, und mindestens einem Anschlag (36; 44; 53; 58; 60) zur Begrenzung der Verformung des mit dem Körper (14; 59; 68) verbundenen Rohrs, **dadurch gekennzeichnet, daß** der Anschlag (36; 44; 53; 60) einen Teil (38) zur Befestigung am Körper (14; 59) aufweist, der durch einen kreisbogenförmigen, gegenüber einem Zwischenbereich des Rohrs zwischen dem festen und dem freien Ende angeordneten aktiven Teil (40; 46; 57) in Richtung des Rohrs (12; 52; 56; 62) verlängert ist.

2. Druckmesser nach Anspruch 1, **dadurch gekennzeichnet, daß** der kreisbogenförmige aktive Teil eine konvexe aktive Fläche (40; 46; 57) mit zum Rohr (12; 52; 56) weisender Konvexität und einem Krümmungsradius, der im wesentlichen dem des Rohrs entspricht, aufweist, an die die radial innere Fläche des Rohrs (12; 52; 56) anstößt.

3. Druckmesser nach Anspruch 1 oder 2, **dadurch gekennzeichnet, daß** der kreisbogenförmige aktive Teil (46) außen durch mindestens einen teilweise ringförmigen Rand (47; 48) zur Begrenzung der Bewegung des Rohrs (52) in einer senkrecht zu der durch das gebogene Rohr (52) definierten Ebene verlaufenden Richtung verlängert ist.

4. Druckmesser nach Anspruch 2 oder 3, **dadurch gekennzeichnet, daß** der kreisbogenförmige aktive Teil des weiteren eine konkave aktive Fläche (54) aufweist, die zur konvexen aktiven Fläche (57) koaxial ist, eine zum Rohr (56) weisende Konkavität und einen Krümmungsradius, der im wesentlichen gleich dem des Rohrs (56) ist, aufweist, wobei sich die konkave aktive Fläche (54) bezüglich der konvexen aktiven Fläche (57) radial außen liegend erstreckt, um die Bewegung des Rohrs (56) in einer radial nach außen verlaufenden Richtung zu begrenzen.

5. Druckmesser nach einem der Ansprüche 1 bis 4, **dadurch gekennzeichnet, daß** der Befestigungsteil einen Ausschnitt (42) aufweist, der eine mit Mitteln zur Befestigung am Körper versehene Aufnahme begrenzt.

6. Druckmesser nach einem der Ansprüche 1 bis 5, **dadurch gekennzeichnet, daß** der Anschlag einen bezüglich des Körpers festgelegten Finger (58) aufweist, der sich in Richtung des geschlossenen freien Endes (61) des Rohrs (62) erstreckt und an den dieses Ende (61) anstößt.

7. Druckmesser nach Anspruch 6, **dadurch gekennzeichnet, daß** sich der Finger (58) im wesentlichen in der Verlängerung des geschlossenen freien Endes (61) des Rohrs (62) erstreckt.

8. Druckmesser nach Anspruch 6 oder 7, **dadurch gekennzeichnet, daß** die Druckanzeige einen Zeiger enthält, der so angebracht ist, daß er sich bezüglich einer graduierten Skala winkelförmig bewegt, der Finger (58) ein mit einem im Körper oder im Rest des Anschlags ausgebildeten komplementären Innengewinde zusammenwirkendes Außengewinde aufweist und ein Glied zur Einstellung der Ruhestellung des Zeigers gegenüber dem Nullpunkt der Graduierung bildet.

9. Druckmesser mit einem Körper (14; 59; 68), einem Drucksensorglied (12; 52; 56; 62; 70), das aus einem an dem Körper (14; 59; 68) befestigten, elastisch verformbaren, gebogenen Rohr besteht, das ein festes Ende (16; 72) zur Herstellung einer Verbindung mit einem Fluid zur Messung des Drucks und ein gegenüberliegendes, geschlossenes Ende (18; 61; 74), das sich unter der Wirkung des Fluiddrucks bezüglich des Körpers (14; 59; 68) bewegen kann und eine Druckanzeige (20; 65; 76) steuert, aufweist, und mindestens einem Anschlag (36; 44; 53; 58; 60) zur Begrenzung der Verformung des mit dem Körper (14; 59; 68) verbundenen Rohrs, **dadurch gekennzeichnet, daß** bei spiralförmiger Gestalt des gebogenen Rohrs (70) der Anschlag (78) einen Teil zur Befestigung am Körper (68) aufweist, der durch einen koaxial zum gebogenen Rohr (70) verlaufenden, zylindrischen aktiven Teil in Richtung des Rohrs (70) verlängert ist.

10. Druckmesser nach einem der Ansprüche 1 bis 9, **dadurch gekennzeichnet, daß** der Anschlag aus Messing besteht.

11. Druckmesser nach einem der Ansprüche 2 bis 9, **dadurch gekennzeichnet, daß** zumindest der aktive Teil des Anschlags aus einem elastisch verformbaren Material hergestellt ist.

## Claims

1. Pressure gauge including a body (14; 59; 68), a pressure sensor member (12; 52; 56; 62; 70) consisting of an elastically deformable bent tube which is fixed to the said body (14; 59; 68) and has a fixed end (16; 72) for communicating with a fluid with a view to measuring its pressure and a closed opposite end (18; 61; 74) which is free to move relative to the said body (14; 59; 68) under the effect of the pressure of the fluid and controls a pressure indicator (20; 65; 76), at least one stop (36; 44; 53; 58; 60) which is intended to limit to the deformation of the tube and is connected to the body (14; 59; 68), **characterized in that** the stop (36; 44; 53; 60) includes a part (38) for fastening on the body (14; 59), extended in the direction of the tube (12; 52; 56; 62) by an active part (40; 46; 57) which is in the form of a circle arc and is arranged facing an intermediate region of the tube (12; 52; 56; 62) fixed and free ends.

2. Pressure gauge according to Claim 1, **characterized in that** the active part in the form of a circle arc has a convex active surface (40; 46; 57) with convexity turned towards the tube (12; 52; 56) and a radius of curvature substantially equal to that of the tube, and on which the radially inward surface of the tube (12; 52; 56) abuts.

3. Pressure gauge according to one of Claims 1 and 2, **characterized in that** the active part (46) in the form of a circle arc is extended outwards by at least one partially annular lip (47; 48) for limiting the movement of the tube (52) in a direction perpendicular to the plane defined by the said bent tube (52).

4. Pressure gauge according to one of Claims 2 and 3, **characterized in that** the active part in the form of a circle arc furthermore has a concave active surface (54), coaxial with the convex active surface (57), with concavity turned towards the tube (56) and the radius of curvature substantially equal to that of the tube (56), the said concave active surface (54) extending radially outwards relative to the said convex active surface (57) in order to limit the movement of the tube (56) in a radially outward direction.

5. Pressure gauge according to any one of Claims 1 to 4, **characterized in that** the fastening part has a cutout (42) defining a housing provided with means for fastening on the said body.

6. Pressure gauge according to any one of Claims 1 to 5, **characterized in that** the stop has a finger (58) which is fixed relative to the body and extends in the direction of the closed free end (61) of the tube (62) and on which this end (61) abuts.

7. Pressure gauge according to Claim 6, **characterized in that** the stop (58) extends substantially in the extension of the closed free end (61) of the tube (62).

8. Pressure gauge according to one of Claims 6 and 7, **characterized in that** the said pressure indicator has a needle mounted so that it can move angularly relative to a graduated dial, and the said finger (58) has a screwthread co-operating with a complementary tap made in the body or in the remaining part of the stop and constitutes a member for adjusting the position at rest of the needle facing the origin of the graduation.

9. Pressure gauge including a body (14; 59; 68), a pressure sensor member (12; 52; 56; 62; 70) consisting of an elastically deformable bent tube which is fixed to the said body (14; 59; 68) and has a fixed end (16; 72) for communicating with a fluid with a view to measuring its pressure and a closed opposite end (18; 61; 74) which is free to move relative to the said body (14; 59; 68) under the effect of the pressure of the fluid and controls a pressure indicator (20; 65; 76), at least one stop (36; 44; 53; 58; 60) which is intended to limit to the deformation of the tube and is connected to the body (14; 59; 68), **characterized in that** the said bent tube (70) having a coiled shape, the stop (78) has a part for fastening on the body (68) which is extended in the direction of the tube (70) by a cylindrical active part coaxial with the bent tube (70).

10. Pressure gauge according to any one of Claims 1 to 9, **characterized in that** the stop is made of brass.

11. Pressure gauge according to any one of Claims 2 to 9, **characterized in that** at least the active part of the stop is made of an elastically deformable material.
